# EUROPEAN PATENT APPLICATION

(11) **EP 3 581 320 A1**
(43) Date of publication of application: **18.12.2019**
(21) Application number: 19175875.4
(22) Date of filing: 22.05.2019
(51) Int. Cl.: B23K 26/00, B23K 26/08, B23K 28/02, B23K 37/02, B23P 23/04

(54) **ADD-ON LASER-BASED SURFACE PROCESSING MODULE AND LATHE COMPRISING THE SAME**

(30) Priority: 22.05.2018 NL 2020964
(71) Applicant: Hornet Laser Cladding B.V., 2952 Alblasserdam (NL); Rijsdijk Holding B.V., 2994 DK Barendrecht (NL)
(72) Inventor: Brugman, Jelmer, 4128 BN Lexmond (NL); Kroeze, Edwin René, 4128 BN Lexmond (NL)
(74) Representative: Renkema, Jaap

(57) **Abstract**

The invention relates to an add-on laser-based surface processing module (1) for a lathe (2) comprising a bed (3) and a carriage assembly (4) that is movable relative to the bed, said lathe accommodating a workpiece (27) above the bed. Said add-on module comprises a laser-based surface processing tool (5) for providing a predetermined treatment to a surface of the workpiece, a supporting frame (6) that is releasably connectable with the lathe and, when connected, supports said tool above said surface of the workpiece, and a movement conversion and transmission arrangement (7) that is associated with the supporting frame and said tool and comprises elements (8) that associate said tool with the carriage assembly and to convert a movement of at least a part of the carriage assembly upon transmission thereof into a movement of the tool to adjust a height at which the tool is positionable above said surface of the workpiece.

The invention also relates to a lathe comprising said add-on module according to the invention.

## Description

### FIELD OF THE INVENTION

The present invention relates to an add-on laser-based surface processing module for a lathe that comprises a bed and a carriage assembly that is configured and arranged to be movable relative to the bed of the lathe. The invention further relates to a lathe comprising the add-on laser-based surface processing module according to the invention.

### BACKGROUND OF THE INVENTION

At present laser-based surface processing systems typically are custom made systems dedicated to a specific application such as for example laser cladding, laser additive manufacturing, laser hardening, laser sintering, laser cleaning and laser polishing. Such dedicated systems commonly require a high investment which makes them unattractive if the desired laser-based surface processing treatment is to be applied only occasionally.

In the art laser-based surface processing systems are known that are based on a conventional lathe. However, in such systems the original operation of the lathe is no longer available as basically only the bed of the lathe and the means to fix a workpiece are still used. As a result of significantly modifying the original lathe typically high costs are incurred in order to render such a laser-based surface processing system compliant with applicable machinery directives. In this way the potential benefits of building a dedicated laser-based surface processing system based on a conventional lathe are practically canceled.

As a result, the accessibility to laser-based surface processing technology can be restricted at least for certain potential users. Based on the above, there is a need to improve the accessibility to laser-based surface processing technology especially when application of this technology is desired just occasionally.

### SUMMARY OF THE INVENTION

It is an object of the present invention to provide an add-on laser-based surface processing module that can be used in combination with a commonly known lathe. The add-on laser-based surface processing module according to the invention pre-empts or at least reduces at least one of the abovementioned and/or other disadvantages associated with dedicated laser-based surface processing systems known in the art.

It is also an object of the present invention to provide a lathe comprising an add-on laser-based surface processing module according to the invention.

Aspects of the present invention are set out in the accompanying independent and dependent claims. Features from the dependent claims may be combined with features from the independent claim as appropriate and not merely as explicitly set out in the claims.

At least one of the abovementioned objects is achieved by an add-on laser-based surface processing module for a lathe, said lathe comprising a bed and a carriage assembly that is configured and arranged to be movable relative to the bed, said lathe being configured and arranged to accommodate a workpiece above the bed, the add-on laser-based surface processing module comprising a laser-based surface processing tool that is configured and arranged to provide a predetermined treatment to a surface of the workpiece, a supporting frame that is configured to be releasably connectable with the lathe and, when connected with the lathe, to support the laser-based surface processing tool above the surface of the workpiece that is to be provided with the predetermined treatment and a movement conversion and transmission arrangement that is associated with the supporting frame and the laser-based surface processing tool and comprises elements that are configured and arranged, when the supporting frame is connected with the lathe, to associate the laser-based surface processing tool with the carriage assembly and to convert a movement of at least a part of the carriage assembly upon transmission thereof into a movement of the laser-based surface processing tool to adjust a height at which the laser-based surface processing tool is positionable above the surface of the workpiece that is to be provided with the predetermined treatment.

The person skilled in the art will appreciate that the add-on laser-based surface processing module according to the invention allows a dedicated system or an existing lathe of any suitable kind to be provided with laser-based surface processing technology. In the latter case an existing lathe is converted into a hybrid system without requiring any modifications to the existing lathe, e.g. to any one of the control systems and the electronics thereof. Hence, normal operation of the lathe is left undisturbed. In one mode of operation the hybrid system can be operated as a conventional lathe and in another mode of operation the hybrid system enables the application of any desired kind of laser-based surface processing technology, such as for example laser cladding, laser additive manufacturing, laser hardening, laser sintering, laser cleaning and laser polishing, in a simple and cost-effective way. In this way, a workpiece can be preprocessed using the hybrid system as a conventional lathe, provided with any desired laser-based process to at least one of its surfaces using the add-on laser-based surface processing module, and be post-processed using the hybrid system again as a conventional lathe. In this way laser-based surface processing technology can be an option even if its use is just occasionally required and a dedicated system is too expensive. As mentioned above, if the laser-based surface processing technology provided by an add-on module according to the invention is not required the add-on laser-based surface processing module can simply be disconnected from the lathe and the lathe can be used in a conventional way.

Furthermore, it is expected that CE conformity can be achieved relatively easily as the add-on laser-based surface processing module does not require fundamental revisions, modifications or risk inventories. Moreover, there will be hardly any impact on the CE conformity of the original lathe and only a CE sub-declaration will have to be issued for the add-on laser-based surface processing module. Furthermore, the add-on laser-based surface processing module is configured to enable an easy and efficient installation. Based on the foregoing, the person skilled in the art will appreciate that in this way a significant cost reduction can be achieved. As a result, the person skilled in the art will appreciate that the add-on laser-based surface processing module according to the invention improves the accessibility to laser-based surface processing technology.

In an embodiment of the add-on laser-based surface processing module according to the invention, a positioning arrangement is provided that is associated with the laser-based surface processing tool and the supporting frame and that is configured and arranged to be movable relative to the supporting frame by the elements of the movement conversion and transmission arrangement to adjust the height at which the laser-based surface processing tool is positionable above the surface of the workpiece that is to be provided with the predetermined treatment. The positioning arrangement improves the positioning of the laser-based surface processing tool above the surface of the workpiece and above the bed of the lathe for that matter.

In an embodiment of the add-on laser-based surface processing module according to the invention, the supporting frame comprises an elongated column comprising an elongated guideway that is configured and arranged to receive and guide at least a part of the positioning arrangement relative to the supporting frame. The positioning arrangement can comprise for example at least one of rotatable elements, such as wheels, and slidable elements. These elements can be associated with the elongated guideway. In this way guiding of the positioning arrangement along the elongated column of the supporting frame can be improved.

In an embodiment of the add-on laser-based surface processing module according to the invention, the elements of the movement conversion and transmission arrangement are passive components.

By avoiding the use of active components such as for example at least one of a motor and an active movement control system to control the positioning of the laser-based surface processing tool above the surface of the workpiece and above the bed of the lathe, the construction of the movement conversion and transmission arrangement can be kept as simple as possible. In this way the complexity of the add-on laser-based surface processing module can be reduced. This is beneficial for the robustness of the add-on laser-based surface processing module. Furthermore, at least regarding movement control of the laser-based surface processing tool, the active movement control functionality of the lathe can be left undisturbed. Therefore, the add-on laser-based surface processing module will in principle not interfere with the normal operation of the active movement control functionality of the lathe and therefore it is unlikely that it causes malfunctioning of the active movement control functionality of the lathe.

In an embodiment of the add-on laser-based surface processing module according to the invention, the elements of the movement conversion and transmission arrangement comprise at least one of a pulley, a cable, a chain and a belt.

The person skilled in the art will appreciate that the laser-based surface processing tool can be interconnected with the carriage assembly of the lathe via a cable that is guided via a pulley or a pulley assembly. In this way a movement of at least a part of the carriage assembly in a direction parallel to the bed of the lathe can be converted upon transmission thereof into a movement of the laser-based surface processing tool. In this way, the height at which the laser-based surface processing tool is positioned above the surface of the workpiece and above the bed of the lathe can be adjusted in a direction transverse to the bed of the lathe. In the event that a positioning arrangement is provided for positioning the laser-based surface processing tool above the surface of the workpiece and above the bed of the lathe, the cable can be used to interconnect the positioning arrangement and the carriage assembly in order to position the laser-based surface processing tool as described above.

In another exemplary embodiment of the add-on laser-based surface processing module, a chain can be used to interconnect any one of the laser-based surface processing tool and the positioning arrangement of the add-on laser-based surface processing module and the carriage assembly of the lathe to achieve the same adjustment of the height at which the laser-based surface processing tool can be positioned above the surface of the workpiece and above the bed of the lathe. The person skilled in the art will appreciate that if required the chain can be guided via a gear wheel or a gear wheel assembly or any other suitable guiding elements known to the person skilled in the art.

In yet another exemplary embodiment of the add-on laser-based surface processing module, a belt can be used to achieve the same adjustment of the height at which the laser-based surface processing tool can be positioned above the surface of the workpiece and above the bed of the lathe. The person skilled in the art will appreciate that if required the belt can be guided via a drum or a drum assembly or any other suitable guiding elements known to the person skilled in the art.

In an embodiment of the add-on laser-based surface processing module according to the invention, the movement conversion and transmission arrangement is a mechanical movement conversion and transmission arrangement. By using a purely mechanical movement conversion and transmission arrangement, it is possible to use the lathe's active movement control functionality that comprises for example at least one of a dedicated motor and an active movement control system for controlling movement of at least a part of the carriage assembly. In this way no modifications of the lathe are required, i.e. neither one of an additional motor, a control system or a safety system needs to be provided. In addition, reprogramming of the software for at least one of the control system and the safety system is not required. Consequently, the normal operation of the original lathe can be left undisturbed. Moreover, the person skilled in the art will appreciate that a purely mechanical movement conversion and transmission arrangement is preferred if the complexity of the add-on laser-based surface processing module is to be kept as low as possible.

In an embodiment of the add-on laser-based surface processing module according to the invention, the movement conversion and transmission arrangement is an electro-mechanical movement and transmission arrangement that comprises an active movement control system comprising a detector and a motor that are operatively associated with each other, wherein the detector is configured and arranged to detect a movement of at least a part of the carriage assembly and supply a signal that represents the detected movement of at least a part of the carriage assembly to the motor that is configured and arranged to drive the elements of the movement conversion and transmission arrangement in order to achieve adjustment of the height at which the laser-based surface processing tool is positionable above the surface of the workpiece that is to be provided with the predetermined treatment.

The person skilled in the art will appreciate that despite adding to the complexity of the add-on laser-based surface processing module certain applications might necessitate the application of an electro-mechanical movement conversion and transmission arrangement.

In an embodiment of the add-on laser-based surface processing module according to the invention, the elements of the movement conversion and transmission arrangement are configured and arranged to convert a linear movement of at least a part of the carriage assembly upon transmission thereof into a linear movement of the laser-based surface processing tool relative to the supporting frame to adjust the height at which the laser-based surface processing tool is positionable above the surface of the workpiece that is to be provided with the predetermined treatment.

In an embodiment of the add-on laser-based surface processing module according to the invention, the linear movement of at least a part of the carriage assembly and the linear movement of the laser-based surface processing tool are directed at an angle with respect to each other.

The skilled person will appreciate that for example a linear movement of at least a part of the carriage assembly in an X-Y plane, i.e. in a plane extending parallel to the bed of the lathe, can be converted by the elements of the movement conversion and transmission arrangement into a linear movement of the laser-based surface processing tool relative to the supporting frame in a Z-direction, i.e. in a direction transverse to the X-Y plane and therefore transverse to the bed of the lathe. In this case, the linear movement of at least a part of the carriage assembly and the linear movement of the laser-based surface processing tool are transversely directed with respect to each other. However, the person skilled in the art will appreciate that any suitable angle between the directions of the linear movements of at least a part of the carriage assembly and the laser-based surface processing tool can be envisaged. Especially when using the add-on laser-based surface processing module with for example a turret lathe or a slant bed lathe.

In embodiments of the add-on laser-based surface processing module according to the invention, the add-on laser-based surface processing module can be any one of an add-on laser cladding module wherein the laser-based surface processing tool is configured and arranged to perform laser cladding, an add-on laser additive manufacturing module wherein the laser-based surface processing tool is configured and arranged to perform laser additive manufacturing, an add-on laser hardening module wherein the laser-based surface processing tool is configured and arranged to perform laser hardening, an add-on laser sintering module wherein the laser-based surface processing tool is configured and arranged to perform laser sintering, an add-on laser cleaning module wherein the laser-based surface processing tool is configured and arranged to perform laser cleaning, and an add-on laser polishing module wherein the laser-based surface processing tool is configured and arranged to perform laser polishing.

According to another aspect of the present invention, a lathe is provided comprising a bed, a carriage assembly that is configured and arranged to be movable relative to the bed, said lathe being configured and arranged to accommodate a workpiece above the bed, and said lathe comprising an add-on laser-based surface processing module according to the invention.

In this way an otherwise standard lathe can be provided with an add-on laser-based surface processing module that enables any desired kind of laser-based surface processing technology, such as for example laser cladding, laser additive manufacturing, laser hardening, laser sintering, laser cleaning and laser polishing, to be used in a simple and cost-effective way. Hence, the need to purchase a dedicated laser-based surface processing systems, which would be economically unattractive, if the desired laser-based surface processing technology is required just occasionally. When the laser-based surface processing technology is not needed the add-on laser-based surface processing module can simply be disconnected from the lathe and the lathe can be used in a conventional way. The person skilled in the art will appreciate that the lathe according to the invention enables the use of laser-based surface processing technology in a simple and cost-effective way. Furthermore, it is expected that CE conformity can be achieved relatively easily as the add-on laser-based surface processing module does not require fundamental revisions, modifications or risk inventories. The person skilled in the art will appreciate that the latter can be a significant cost reduction. Consequently, the person skilled in the art will appreciate that the accessibility to laser-based surface processing technology is improved by the lathe according to the invention.

In an embodiment of the lathe according to the invention, the carriage assembly comprises at least one carriage that is associated with the bed and that is configured and arranged to be movable relative to the bed. Commonly, the movement of the carriage along the bed is a linear movement that can be carried out manually but preferably is carried out in a computer-controlled manner. The latter can be implemented using an active movement control system. The elements of the movement conversion and transmission arrangement of the add-on laser-based surface processing module can be configured and arranged to convert a movement of the at least one carriage upon transmission thereof into a movement of the laser-based surface processing tool to adjust the height at which the laser-based surface processing tool is positioned above the surface of the workpiece and above the bed.

In an embodiment of the lathe according to the invention, the carriage assembly further comprises a cross-slide that is associated with said at least one carriage and that is configured and arranged to be movable relative to said at least one carriage. Commonly, the cross-slide is configured and arranged to be movable in directions transverse to the directions in which the at least one carriage is movable. In a preferred embodiment, the elements of the movement conversion and transmission arrangement of the add-on laser cladding module are configured and arranged to convert a movement of the cross-slide upon transmission thereof into a movement of the laser-based surface processing tool to adjust the height at which the laser-based surface processing tool is positioned above the surface of the workpiece and above the bed.

In an embodiment of the lathe according to the invention, the carriage assembly further comprises a top slide that is associated with the cross-slide and that is configured and arranged to be movable relative to at least one of said at least one carriage and the cross-slide. The elements of the movement conversion and transmission arrangement of the add-on laser cladding module can be configured and arranged to convert a movement of the top slide upon transmission thereof into a movement of the laser-based surface processing tool to adjust the height at which the laser-based surface processing tool is positioned above the bed. Commonly, the top slide is configured and arranged to support a chisel holder that is configured to accommodate at least one chisel. The person skilled in the art will appreciate that no chisel is used when the lathe is provided with the add-on laser-based surface processing module according to the invention.

In an embodiment of the lathe according to the invention, the lathe can be any one of a conventional lathe, a computer numerical controlled (CNC) lathe, a turret lathe, a teach-in lathe, a slant bed lathe, a three-way bed lathe, a four-way bed lathe, a heavy duty lathe, an oil country lathe, a front operated lathe, and a crankshaft lathe. The person skilled in the art will appreciate that any other suitable kind of lathe can also be used in combination with the add-on laser-based surface processing module according to the invention.

### BRIEF DESCRIPTION OF THE DRAWINGS

Further features and advantages of the invention will become apparent from the description of the invention by way of exemplary and non-limiting embodiments of an add-on laser-based surface processing module and a lathe according to the invention.

The person skilled in the art will appreciate that the described embodiments of the add-on laser-based surface processing module and the lathe are exemplary in nature only and not to be construed as limiting the scope of protection in any way. The person skilled in the art will realize that alternatives and equivalent embodiments of the add-on laser-based surface processing module and the lathe can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1 shows a schematic partially cross-sectional view of a first exemplary, non-limiting embodiment of a lathe according to the invention that comprises a first exemplary, non-limiting embodiment of an add-on laser-based surface processing module according to the invention;
figure 2 shows a schematic partially cross-sectional view of a second exemplary, non-limiting embodiment of a lathe according to the invention that comprises a second exemplary, non-limiting embodiment of an add-on laser-based surface processing module according to the invention;
figure 3 shows a schematic partially cross-sectional view of the first exemplary, non-limiting embodiment of the lathe as shown in figure 1 that comprises a third exemplary, non-limiting embodiment of an add-on laser-based surface processing module according to the invention; and
figure 4 shows a schematic partially cross-sectional view of the first exemplary, non-limiting embodiment of the lathe as shown in figure 1 that comprises a fourth exemplary, non-limiting embodiment of an add-on laser-based surface processing module according to the invention.

### DETAILED DESCRIPTION OF EMBODIMENTS

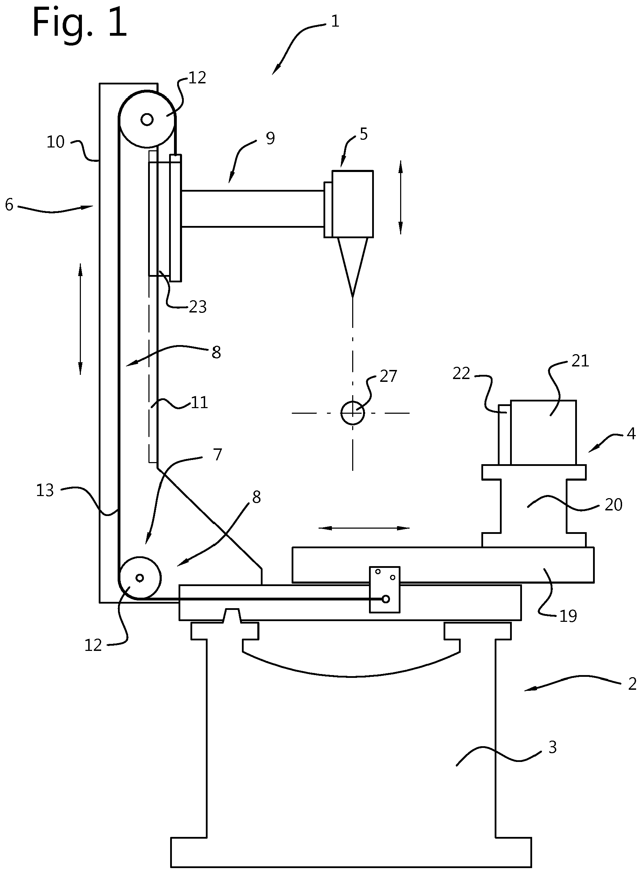

Figure 1 shows a schematic partially cross-sectional view of a first exemplary, non-limiting embodiment of a lathe 2 according to the invention that comprises a first exemplary, non-limiting embodiment of an add-on laser-based surface processing module 1 according to the invention. The lathe 2 can be any one of a conventional lathe, a computer numerical controlled (CNC) lathe, a turret lathe, a teach-in lathe, a slant bed lathe, a three-way bed lathe, a four-way bed lathe, a heavy duty lathe, an oil country lathe, a front operated lathe, and a crankshaft lathe. The lathe 2 comprises a bed 3 and a carriage assembly 4 that is configured and arranged to be movable relative to the bed 3 and to accommodate a workpiece 27 above the bed. The person skilled in the art will appreciate that the workpiece 27 will be accommodated in some sort of workpiece holder that has not been shown in figure 1 nor in any one of the other figures for that matter in order not to unnecessarily complicate the drawings. The person skilled in the art will appreciate that the bed 3 can have any suitable cross-sectional shape such as a V-shape or a U-shape depending on the type of lathe.

The carriage assembly 4 of the lathe 2 shown in figure 1 comprises a carriage 19 that is associated with the bed 3 and that is configured and arranged to be movable relative to the bed 3. The carriage assembly 4 further comprises a cross-slide 20 that is associated with the carriage 19 and that is configured and arranged to be movable relative to the carriage 19. Commonly, the cross-slide 20 is configured and arranged to be movable in directions transverse to the directions in which the carriage 19 is movable. The carriage assembly 4 shown in figure 1 also comprises a top slide 21 that is associated with the cross-slide 20 and that is configured and arranged to be movable relative to at least one of the carriage 19 and the cross-slide 20.

The add-on laser-based surface processing module 1 shown in figure 1 comprises a supporting frame 6 that is releasably connected to the lathe 2. The add-on laser-based surface processing module 1 further comprises a laser-based surface processing tool 5 that is associated with the elongated column 10 of the supporting frame 6 via a positioning arrangement 9 that is configured and arranged to be movable relative to the supporting frame 6 by elements 8 of a movement conversion and transmission arrangement 7. The elements 8 in the embodiment shown in figure 1 comprise pulleys 12 and a cable 13 that are configured and arranged to associate the positioning arrangement 9 with the carriage assembly 4 and to convert a movement of the carriage assembly 4 upon transmission thereof into a movement of the positioning arrangement 9 to adjust a height at which the laser-based surface processing tool 5 is positionable above the bed 3. As shown in figure 1, the height at which the laser-based surface processing tool 5 is positionable above the surface of the workpiece 27 and above the bed 3 of the lathe 2 can be adjusted in a direction transverse to the bed 3 of the lathe 2. The skilled person will understand that in another exemplary embodiment of the add-on laser-based surface processing module 1, a chain 14 can be used to interconnect the positioning arrangement 9 and the carriage assembly 4 to achieve the same adjustment of the height at which the laser-based surface processing tool 5 can be positioned above the surface of the workpiece 27 and above the bed 3 of the lathe 2. The person skilled in the art will appreciate that if required the chain 14 can be guided via a gear wheel (not shown) or a gear wheel assembly (not shown) or any other suitable guiding elements (not shown) known to the person skilled in the art.

Furthermore, in yet another exemplary embodiment of the add-on laser-based surface processing module 1, a belt 15 can be used to achieve the same adjustment of the height at which the laser-based surface processing tool 5 can be positioned above the surface of the workpiece 27 and above the bed 3 of the lathe 2. The person skilled in the art will appreciate that if required the belt 15 can be guided via a drum (not shown) or a drum assembly (not shown) or any other suitable guiding elements (not shown) known to the person skilled in the art.

The add-on laser cladding module 1 shown in figure 1 comprises a laser-based surface processing tool 5 that is configured and arranged to perform laser cladding. Laser cladding is a well-known fabrication process that can be used for example in coating of surfaces and in additive manufacturing of three-dimensional objects. The laser-based surface processing tool 5 comprises at least one laser to melt so-called feedstock material, focusing optics and at least one nozzle to deposit the melted feedstock material. The person skilled in the art will appreciate that the laser-based surface processing tool 5 can also be configured and arranged to perform any one of for example laser additive manufacturing, laser hardening, laser sintering, laser cleaning, arc welding, and laser polishing.

As shown in figure 1, the elongated column 10 of the supporting frame 6 comprises an elongated guideway 11 that is configured and arranged to receive and guide at least a part of the positioning arrangement 9 relative to the supporting frame 6. The positioning arrangement 9 comprises a slidable element 23 that is associated with the elongated guideway 11. In this way guiding of the positioning arrangement 9 along the elongated column 10 of the supporting frame 6 can be improved.

It is noted that usually, the elements 8 of the movement conversion and transmission arrangement 7 of the add-on laser cladding module 1 are configured and arranged to convert a movement of the cross-slide 20 upon transmission thereof into a movement of the laser-based surface processing tool 5 to adjust the height at which the laser-based surface processing tool 5 is positioned above the surface of the workpiece 27 and above the bed 3. However, the latter can also be achieved by configuring and arranging the elements 8 of the movement conversion and transmission arrangement 7 to convert a movement of the carriage 19 or a movement of the top slide 21 upon transmission thereof into a movement of the laser-based surface processing tool 5. It is noted that commonly the top slide 21 is provided with a chisel holder 22 that is configured to accommodate at least one chisel. The person skilled in the art will appreciate that no chisel is used when the lathe 2 is provided with the add-on laser-based surface processing module 1 according to the invention.

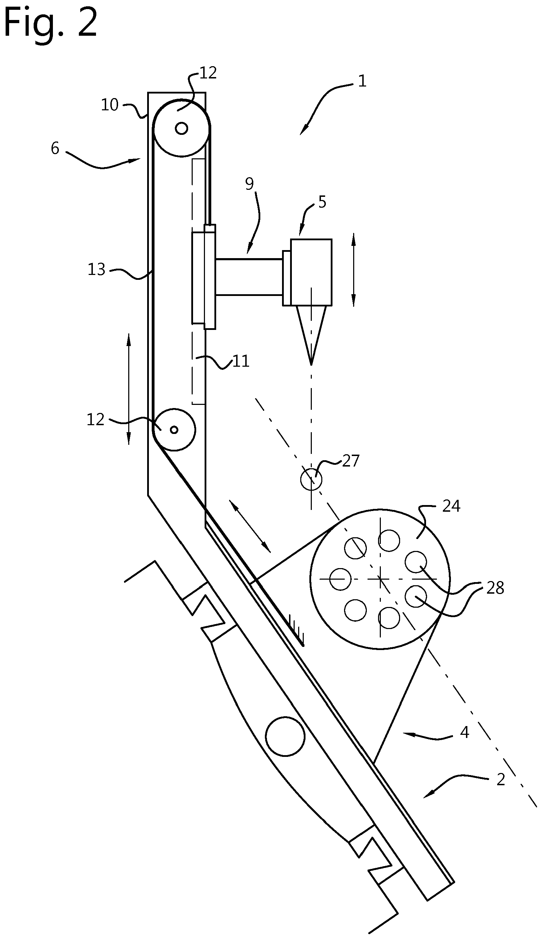

Furthermore, it is noted that the movement of any one of the carriage 19, the cross-slide 20 and the top slide 21 relative to the bed 3 of the lathe 2 is usually a linear movement that can be carried out manually but preferably is carried out in a computer-controlled manner. The latter can be implemented using an active movement control system of the lathe (not shown). The linear movement of at least one of the carriage 19, the cross-slide 20 and the top slide 21 of the carriage assembly 4 and the linear movement of the laser-based surface processing tool 5 are directed at an angle with respect to each other. As shown in figure 1, a linear movement of the carriage 19 in an X-Y plane, i.e. in a plane extending parallel to the bed 3 of the lathe 2, can be converted by the elements 8 of the movement conversion and transmission arrangement 7 into a linear movement of the laser-based surface processing tool 5 in a Z-direction, i.e. in a direction transverse to the X-Y plane and therefore transverse to the bed 3 of the lathe 2. In this case, the linear movement of the carriage 19 and the linear movement of the laser-based surface processing tool 5 are transversely directed with respect to each other. However, the person skilled in the art will appreciate that any suitable angle between the directions of the linear movements of at least a part of the carriage assembly 4 and the laser-based surface processing tool 5 can be envisaged. See for example figure 2 that shows a schematic partially cross-sectional view of a second exemplary, non-limiting embodiment of a lathe 2 according to the invention that comprises a second exemplary, non-limiting embodiment of an add-on laser-based surface processing module 1 according to the invention. The lathe 2 shown in figure 2 is a turret lathe in which the linear movement of the carriage assembly 4 that accommodates a turret 24 comprising tools 28, e.g. cutting tools, and the linear movement of the laser-based surface processing tool 5 are directed with respect to each other at a predetermined angle. It is to be noted that the linear movement of the laser-based surface processing tool 5 must be in a direction parallel to gravity if the laser-based surface processing tool 5 is configured and arranged to perform laser cladding. The person skilled in the art will appreciate that the laser-based surface processing tool 5 can also be configured and arranged to perform any one of for example laser additive manufacturing, laser hardening, laser sintering, laser cleaning, arc welding, and laser polishing. Depending on the desired surface processing technology the predetermined angle between the direction of the linear movement of the carriage assembly 4 and the linear movement of the laser-based surface processing tool 5 can be chosen differently.

The embodiments of the add-on laser-based surface processing module 1 as shown in figures 1 and 2 comprise a purely mechanical movement conversion and transmission arrangement 7 as the elements 8 of the movement conversion and transmission arrangement are only comprise passive components such as pulleys 12 and cables 13. The person skilled in the art will appreciate that by avoiding the use of active components such as for example at least one of a motor and an active movement control system to control the positioning of the laser-based surface processing tool 5 above the surface of the workpiece 27 and above the bed 3 of the lathe 2, the construction of the movement conversion and transmission arrangement 7 can be kept as simple as possible. In this way the complexity of the add-on laser-based surface processing module 1 can be reduced. This is beneficial for the robustness of the add-on laser-based surface processing module 1. Furthermore, by using a purely mechanical movement conversion and transmission arrangement 7, it is possible to use the lathe's active movement control functionality (not shown) that comprises for example at least one of a dedicated motor and an active movement control system for controlling movement of at least a part of the carriage assembly 4. In this way no modifications of the lathe 2 are required, i.e. at least regarding movement control of the laser-based surface processing tool 5, the active movement control functionality (not shown) of the lathe 2 can be left undisturbed. Consequently, the add-on laser-based surface processing module 1 will in principle not interfere with the normal operation of the active movement control functionality of the lathe 2 and therefore it is unlikely that it causes malfunctioning of the active movement control functionality of the lathe 2 and the normal operation of the lathe can remain unaffected. Moreover, the person skilled in the art will appreciate that a purely mechanical movement conversion and transmission arrangement 7 is preferred if the complexity of the add-on laser-based surface processing module 1 is to be kept as low as possible.

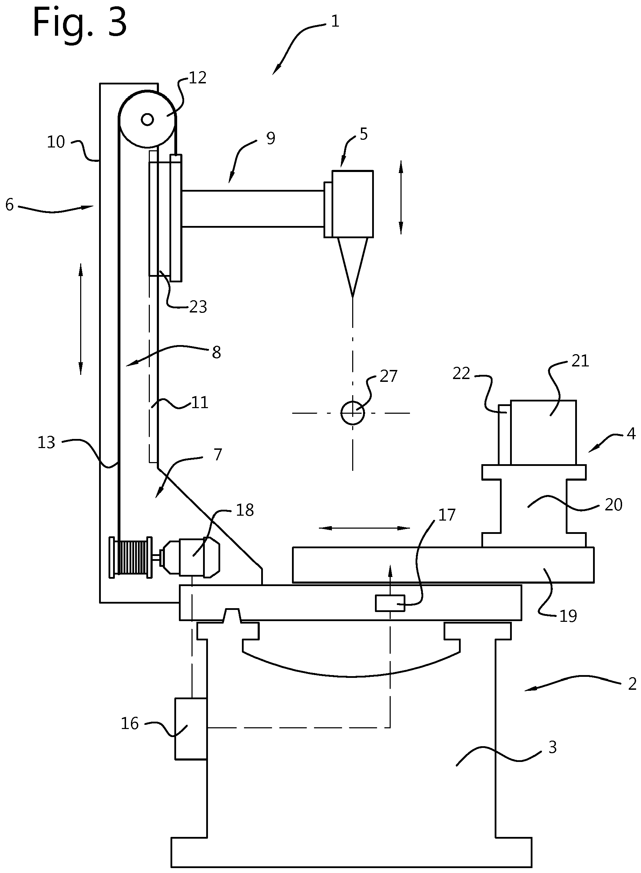

Figure 3 shows a schematic partially cross-sectional view of the first exemplary, non-limiting embodiment of the lathe 2 as shown in figure 1 that comprises a third exemplary, non-limiting embodiment of an add-on laser-based surface processing module 1 according to the invention. The third embodiment of the add-on laser-based surface processing module 1 comprises an electro-mechanical movement conversion and transmission arrangement 7 that comprises an active movement control system 16 comprising a detector 17 and a motor 18 that are operatively associated with each other via a wired connection. The person skilled in the art will appreciate that the detector 17 and the motor 18 can also be operatively associated with each other via a wireless connection. The detector 17 is configured and arranged to detect a movement of at least a part of the carriage assembly 4 and to supply a signal that represents the detected movement of at least a part of the carriage assembly 4 to the motor 18. The detector 17 can be an optical detector. It is also possible that the optical detector is configured and arranged to detect a movement of a drive axle of the lathe that is configured and arranged to drive at least a part of the carriage assembly 4. The person skilled in the art will appreciate that any suitable detector or sensor can be used. The motor 18 is configured and arranged to drive the elements 8 of the movement conversion and transmission arrangement 7 upon receiving a signal of the detector 17, in order to achieve adjustment of the height at which the laser-based surface processing tool 5 is positionable above the bed. The motor can be connected to the cable 13 that is guided over a pulley 12 of the movement conversion and transmission arrangement 7 to form a kind of winch assembly that enables adjustment of the height at which the laser-based surface processing tool 5 is positionable above the surface of the workpiece 27 and above the bed 3 of the lathe 2. The person skilled in the art will appreciate that the motor can be part of any electro-mechanical assembly, for example an assembly comprising axles and transmissions, that is suitable for adjusting the height of the laser-based surface processing tool 5 above the surface of the workpiece 27 and above the bed 3 of the lathe 2 upon receiving a signal from the detector 17. Moreover, the person skilled in the art will appreciate that certain applications might necessitate the application of an electro-mechanical movement conversion and transmission arrangement 7 despite the fact that this adds to the complexity of the add-on laser-based surface processing module 1 according to the invention.

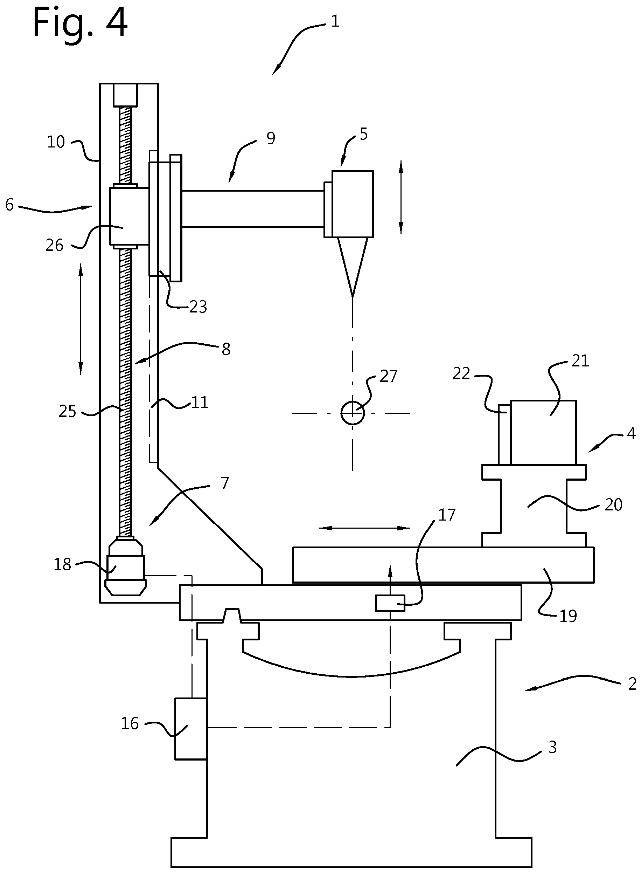

Figure 4 shows a schematic partially cross-sectional view of the first exemplary, non-limiting embodiment of the lathe 2 as shown in figure 1 that comprises a fourth exemplary, non-limiting embodiment of an add-on laser-based surface processing module 1 according to the invention. In accordance with the fourth embodiment of the add-on laser-based surface processing module 1, the electro-mechanical movement conversion and transmission arrangement 7 comprises a spindle axle 25 that is connected with a spindle nut 26. The spindle axle 25 is connected with the motor 18 of the active movement control system 16 that is configured and arranged to drive the spindle axle 25 and the spindle nut 26 relative to each other upon receiving a signal of the detector 17 in order to achieve adjustment of the height at which the laser-based surface processing tool 5 is positionable above the bed. As discussed in relation to figure 3, the skilled person will appreciate that the detector 17 and the motor 18 can be operatively associated with each other via at least one of a wired connection and a wireless connection. The detector 17 is configured and arranged to detect a movement of at least a part of the carriage assembly 4 and to supply a signal that represents the detected movement of at least a part of the carriage assembly 4 to the motor 18. As mentioned above, the person skilled in the art will appreciate that the detector 17 can be any suitable detector, e.g. an optical detector, or sensor. The detector 17 can also be configured and arranged to detect a movement of a drive axle of the lathe that is configured and arranged to drive at least a part of the carriage assembly 4.

The present invention can be summarized as relating to an add-on laser-based surface processing module 1 for a lathe 2 comprising a bed 3 and a carriage assembly 4 that is movable relative to the bed, said lathe accommodating a workpiece 27 above the bed. Said add-on module comprises a laser-based surface processing tool 5 for providing a predetermined treatment to a surface of the workpiece, a supporting frame 6 that is releasably connectable with the lathe and, when connected, supports said tool 5 above said surface of the workpiece 27 and above the bed 3, and a movement conversion and transmission arrangement 7 that is associated with the supporting frame and said tool 5 and comprises elements 8 that associate said tool 5 with the carriage assembly and to convert a movement of at least a part of the carriage assembly upon transmission thereof into a movement of the tool 5 to adjust a height at which the tool 5 is positionable above said surface of the workpiece and above the bed.

The invention also relates to a lathe comprising said add-on module according to the invention. It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 1: add-on laser cladding module
- 2: lathe
- 3: bed
- 4: carriage assembly
- 5: laser cladding head
- 6: supporting frame
- 7: movement conversion and transmission arrangement
- 8: elements of the movement conversion and transmission arrangement
- 9: positioning arrangement
- 10: elongated column of the supporting frame
- 11: guideway of the elongated column
- 12: pulley
- 13: cable
- 14: chain
- 15: belt
- 16: active movement control system
- 17: detector
- 18: motor
- 19: carriage
- 20: cross-slide
- 21: top slide
- 22: chisel holder
- 23: slidable element
- 24: turret
- 25: spindle axle
- 26: spindle nut
- 27: workpiece
- 28: tools

## Claims

1. An add-on laser-based surface processing module (1) for a lathe (2), said lathe comprising a bed (3) and a carriage assembly (4) that is configured and arranged to be movable relative to the bed, said lathe being configured and arranged to accommodate a workpiece (27) above the bed, the add-on laser-based surface processing module (1) comprising:
- a laser-based surface processing tool (5) that is configured and arranged to provide a predetermined treatment to a surface of the workpiece (27);
- a supporting frame (6) that is configured to be releasably connectable with the lathe (2) and, when connected with the lathe, to support the laser-based surface processing tool (5) above the surface of the workpiece that is to be provided with the predetermined treatment; and
- a movement conversion and transmission arrangement (7) that is associated with the supporting frame (6) and the laser-based surface processing tool (5) and comprises elements (8) that are configured and arranged, when the supporting frame (6) is connected with the lathe (2), to associate the laser-based surface processing tool (5) with the carriage assembly (4) and to convert a movement of at least a part of the carriage assembly (4) upon transmission thereof into a movement of the laser-based surface processing tool (5) to adjust a height at which the laser-based surface processing tool (5) is positionable above the surface of the workpiece (27) that is to be provided with the predetermined treatment.

2. The add-on laser-based surface processing module (1) according to claim 1, wherein a positioning arrangement (9) is provided that is associated with the laser-based surface processing tool (5) and the supporting frame (6) and that is configured and arranged to be movable relative to the supporting frame (6) by the elements (8) of the movement conversion and transmission arrangement (7) to adjust the height at which the laser-based surface processing tool (5) is positionable above the surface of the workpiece (27) that is to be provided with the predetermined treatment.

3. The add-on laser-based surface processing module (1) according to claim 2, wherein the supporting frame (6) comprises an elongated column (10) comprising an elongated guideway (11) that is configured and arranged to receive and guide at least a part of the positioning arrangement (9) relative to the supporting frame (6).

4. The add-on laser-based surface processing module (1) according to any one of the preceding claims, wherein the elements (8) of the movement conversion and transmission arrangement (7) are passive components.

5. The add-on laser-based surface processing module (1) according to any one of the preceding claims, wherein the elements (8) of the movement conversion and transmission arrangement (7) comprise at least one of a pulley (12), a cable (13), a chain (14) and a belt (15).

6. The add-on laser-based surface processing module (1) according to any one of the preceding claims, wherein the movement conversion and transmission arrangement (7) is a mechanical movement conversion and transmission arrangement.

7. The add-on laser-based surface processing module (1) according to any one of the claims 1 to 5, wherein the movement conversion and transmission arrangement (7) is an electro-mechanical movement and transmission arrangement that comprises an active movement control system (16) comprising a detector (17) and a motor (18) that are operatively associated with each other, wherein the detector (17) is configured and arranged to detect a movement of at least a part of the carriage assembly (4) and supply a signal that represents the detected movement of at least a part of the carriage assembly (4) to the motor (18) that is configured and arranged to drive the elements (8) of the movement conversion and transmission arrangement (7) in order to achieve adjustment of the height at which the laser-based surface processing tool (5) is positionable above the surface of the workpiece (27) that is to be provided with the predetermined treatment.

8. The add-on laser-based surface processing module (1) according to any one of the preceding claims, wherein the elements (8) of the movement conversion and transmission arrangement (7) are configured and arranged to convert a linear movement of at least a part of the carriage assembly (4) upon transmission thereof into a linear movement of the laser-based surface processing tool (5) relative to the supporting frame (6) to adjust the height at which the laser-based surface processing tool (5) is positionable above the surface of the workpiece (27) that is to be provided with the predetermined treatment.

9. The add-on laser-based surface processing module (1) according to claim 8, wherein the linear movement of at least a part of the carriage assembly (4) and the linear movement of the laser-based surface processing tool (5) are directed at an angle with respect to each other.

10. The add-on laser-based surface processing module (1) according to any one of the preceding claims, wherein the add-on laser-based surface processing module is any one of:
- an add-on laser cladding module wherein the laser-based surface processing tool (5) is configured and arranged to perform laser cladding;
- an add-on laser additive manufacturing module wherein the laser-based surface processing tool (5) is configured and arranged to perform laser additive manufacturing;
- an add-on laser hardening module wherein the laser-based surface processing tool (5) is configured and arranged to perform laser hardening;
- an add-on laser sintering module wherein the laser-based surface processing tool (5) is configured and arranged to perform laser sintering;
- an add-on laser cleaning module wherein the laser-based surface processing tool (5) is configured and arranged to perform laser cleaning; and
- an add-on laser polishing module wherein the laser-based surface processing tool (5) is configured and arranged to perform laser polishing.

11. A lathe (2) comprising a bed (3), a carriage assembly (4) that is configured and arranged to be movable relative to the bed, said lathe being configured and arranged to accommodate a workpiece (27) above the bed, and said lathe comprising an add-on laser-based surface processing module (1) according to any one of the preceding claims.

12. The lathe (2) according to claim 11, wherein the carriage assembly (4) comprises at least one carriage (19) that is associated with the bed (3) and that is configured and arranged to be movable relative to the bed.

13. The lathe (2) according to claim 11 or 12, wherein the carriage assembly (4) further comprises a cross-slide (20) that is associated with said at least one carriage (19) and that is configured and arranged to be movable relative to said at least one carriage (19).

14. The lathe (2) according to claim 13, wherein the carriage assembly (4) further comprises a top slide (21) that is associated with the cross-slide (20) and that is configured and arranged to be movable relative to at least one of said at least one carriage (19) and the cross-slide (20).

15. The lathe (2) according to any one of the claims 11 to 14, wherein the lathe is any one of:
- a conventional lathe;
- a computer numerical controlled (CNC) lathe;
- a turret lathe;
- a teach-in lathe;
- a slant bed lathe;
- a three-way bed lathe;
- a four-way bed lathe;
- a heavy duty lathe;
- an oil country lathe;
- a front operated lathe; and
- a crankshaft lathe.
